# EUROPÄISCHE PATENTSCHRIFT

(11) **EP 3 031 785 B1**
(45) Veröffentlichungstag und Bekanntmachung des Hinweises auf die Patenterteilung: **17.10.2018**
(21) Anmeldenummer: 15197588.5
(22) Anmeldetag: 02.12.2015
(51) Int. Cl.: C03C 23/00, B23K 26/00, F24C 15/10

(54) **VERFAHREN ZUR HERSTELLUNG EINES GLASKERAMIKELEMENTS MIT STRUKTURIERTER BESCHICHTUNG**
METHOD FOR PRODUCING A GLASS CERAMIC ELEMENT HAVING A STRUCTURED COATING
PROCEDE DE FABRICATION D'UN ELEMENT EN VITROCERAMIQUE FAISANT APPEL A UN REVETEMENT STRUCTURE

(30) Priorität: 12.12.2014 DE 102014118497; 10.03.2015 DE 102015103518
(43) Veröffentlichungstag der Anmeldung: 15.06.2016
(73) Patentinhaber: Schott AG, 55122 Mainz (DE)
(72) Erfinder: WAGNER, Fabian, 55118 Mainz (DE); WALDSCHMIDT, Holger, 55234 Nieder-Wiesen (DE)
(74) Vertreter: Blumbach · Zinngrebe Patent- und Rechtsanwälte

(56) Entgegenhaltungen:
- EP-A1- 0 959 051
- EP-A1- 2 573 204
- EP-A2- 2 687 493
- WO-A2-03/020527
- WO-A2-2014/170275
- DE-A1-102013 103 774
- DE-A1-102013 103 776

## Beschreibung

Die Erfindung betrifft allgemein Glaskeramikartikel, die mit strukturierten Beschichtungen versehen sind. Insbesondere betrifft die Erfindung Glaskeramikartikel, welche lichtdurchlässige Strukturierungen in Beschichtungen aufweisen.

Aus dem Stand der Technik sind Glaskeramik-Kochfelder bekannt, die auf ihrer Unterseite beschichtet sind, um die Anmutung zu ändern, sowie auch, um unter der Glaskeramik verbaute Teile des Herdes zu verbergen.

Eine Möglichkeit hierzu sind Sol-Gel-Beschichtungen. Diese sind recht temperaturbeständig und zeichnen sich auch durch eine gute Haftung an der Glaskeramik-Platte aus. Um die inneren Teile eines Herdes zu verdecken, werden typischerweise opake Beschichtungen verwendet.

Für einige Anwendungen ist es dabei wünschenswert, wenn die Beschichtung nicht vollflächig ist, sondern Fenster aufweist. Solche Fenster werden insbesondere vor leuchtenden Anzeigeelementen angeordnet, so dass diese Anzeigeelemente durch die Glaskeramikplatte hindurch leuchten und für einen Bediener, welcher die Nutzseite des Kochfelds betrachtet, sichtbar ist. Teilweise werden diese Fenster durch transluzente Beschichtungen abgedeckt, um den ästhetischen Eindruck zu verbessern. Bei gleichem Farbton wird dadurch eine homogene Fläche erzeugt.

Bei Kochfeldern werden heute mittels Siebdruck Symbole, Zeichen oder sonstige Logos und Designs gedruckt. Allerdings ist es hier schwierig, sehr feine Strukturen, wie beispielsweise dünne Linien zu erzeugen.

Außerdem kommt es bei der Produktion von sehr feinen/kleinen Logos leicht zur Verschmierung der Farbe und dadurch zu Ausschuss. Des Weiteren ist für jede neue Produktanfrage/Designänderung die Anfertigung eines neuen Siebes nötig, wodurch Rüstkosten sehr hoch sind, was sich gerade bei kleinen Serien stark bemerkbar macht. Das Herstellen von individuellen Designs für jeden Endkunden ist daher teuer.

Bei mehrschichtigen Beschichtungen besteht zudem bei einer Drucktechnik wie dem Siebdrucken das Problem, dass eine deckungsgleiche Strukturierung hier schwierig ist. Daher wird bei mehrschichtigen Beschichtungen hier üblicherweise ein größeres Fenster in einer der Beschichtungslagen freigelassen und eine weitere Beschichtungslage im Bereich des Fensters genauer mit dem gewünschten Muster zu strukturieren. Das Fenster kann aber insbesondere bei leuchtenden Anzeigeelementen sichtbar sein, wenn die genauer strukturierte Beschichtungslage nicht vollständig lichtundurchlässig ist.

Die EP 0868960 B1 schlägt ein Verfahren zur Herstellung von Steuerpultschildern, insbesondere für elektrische Haushaltsgeräte vor, bei welchem mindestens eine personalisierte Lasergravur auf mindestens einem Siebdruck hergestellt wird, welcher bereits auf einen Basis-Schildrohling aus Glas aufgebracht wurde, indem man durch Materialabnahme Dekore, Symbole oder entsprechende Zeichen in der Siebdruck-Schicht anbringt und indem man danach diese Gravuren durch manuelles oder automatisiertes Aufbringen mit einer Schicht unterschiedlicher Farbe überdeckt, was unmittelbar nach dem Gravurschritt oder in einem getrennten Arbeitsgang erfolgen kann. Auch hier werden demnach mehrere Schichten aufgetragen, wobei zwischen dem Auftrag die Lasergravur erfolgt. Wünschenswert hinsichtlich des Arbeitsablaufes wäre es aber, die Arbeitsgänge des Beschichtens zusammenzufassen.

Der Erfindung liegt die Aufgabe zugrunde, das Herstellen strukturierter Beschichtungen auf Glaskeramik-Trägern dahingehend zu verbessern, die Strukturierung flexibler gestalten zu können und auch feinere Strukturen erzeugen zu können, als dies mit Siebdruck möglich ist. Zudem wird durch den Siebdruck nur die Beschichtung selbst strukturiert. Gegebenenfalls besteht aber auch das Bedürfnis, an den unbeschichtet gebliebenen Abschnitten des Glaskeramikelements auch die Glaskeramik zu strukturieren.

Diese Aufgabe der Erfindung wird durch den Gegenstand der unabhängigen Ansprüche gelöst. Vorteilhafte Ausgestaltungen und Weiterbildungen der Erfindung sind in den jeweiligen abhängigen Ansprüchen angegeben.

Eine grundlegende Idee der Erfindung besteht darin, aus einer Beschichtung auf einem Glaskeramikartikel mittels Laser Beschichtung nachträglich zu entfernen. Dabei kann dann auch die freigelegte Glaskeramik mittels des Lasers selber verändert werden, um weitere Möglichkeiten zu erhalten, das Design und die optischen Eigenschaften der Glaskeramik zu verändern.

Um die Anzeigeelemente oder weitere technische Gegenstände im Bereich des Fensters / der Struktur unterhalb der Glaskeramik zu verdecken kann dies gemäß einer Ausführungsform durch eine transluzente Beschichtung erfolgen. Alternativ kann auch eine farblich angepasste, transluzente Folie zwischen Leuchtelemente und den Fenstern / den Strukturen der Glaskeramik eingelegt werden. Dadurch wird die Sichtbarkeit des Anzeigeelements und der homogene ästhetische Eindruck des Bedieners, welcher die Nutzseite des Kochfelds betrachtet, gelöst.

Die Erfindung wird nachfolgend genauer erläutert. Dabei wird auch auf die beigeschlossenen Figuren Bezug genommen. In den Figuren bezeichnen gleiche Bezugszeichen jeweils gleiche oder entsprechende Elemente.

Es zeigen:
- Fig. 1: eine strukturierte mehrlagige Beschichtung auf einem Glaskeramikelement nach dem Stand der Technik,
- Fig. 2: eine Vorrichtung zur Durchführung des erfindungsgemäßen Verfahrens,
- Fig. 3: ein mit dem erfindungsgemäßen Verfahren bearbeitetes Glaskeramikelement,
- Fig. 4: Transmissionsspektren eines mittels Laserbestrahlung abgedunkelten und eines benachbarten, nicht abgedunkelten Bereichs,
- Fig. 5: der relative Unterschied der in Fig. 4 gezeigten Transmissionsspektren,
- Fig. 6: Transmissionsspektren in Abhängigkeit vom Abstand der Fokusebene des Lasers zum Glaskeramikelement,
- Fig. 7: eine Ausführungsform eines Glaskeramikelements mit lichtstreuenden Defekten,
- Fig. 8: ein weiteres Ausführungsbeispiel eines mit einem Laser bearbeiteten Glaskeramikelements, und
- Fig. 9: ein Glaskeramik-Kochfeld 30.

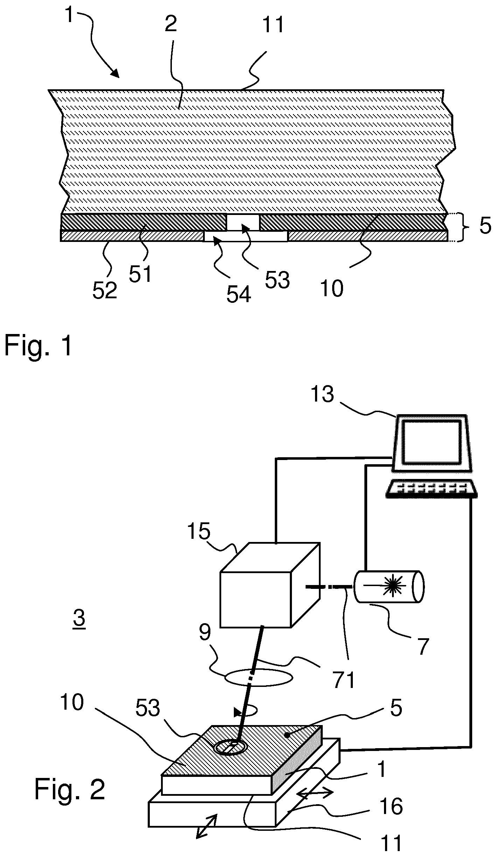

Zur weiteren Erläuterung eines mit strukturierter Beschichtung versehenen Glaskeramikelements 1 wird zunächst auf das Beispiel der Fig. 1 Bezug genommen, welches eine im üblichen Siebdruck hergestellte Beschichtung 5 umfasst. Das plattenförmige Glaskeramikelement 1 weist zwei gegenüberliegende Seitenflächen 10, 11 auf. Bei einem Glaskeramikelement in Form einer Glaskeramik-Kochplatte bildet eine der Seitenflächen 10, 11 die Nutzseite.

Die Beschichtung 5 auf mindestens einer der Seitenflächen 10, 11 ist mehrlagig und setzt sich aus einer ersten Farbschicht 51 auf der Glaskeramik 2 und einer auf der ersten Farbschicht 51 aufgebrachten zweiten Farbschicht 52 zusammen. In der ersten Farbschicht 51 ist ein Strukturelement 53 vorhanden. Dieses Strukturelement wird durch einen Bereich gebildet, in welchem die Glaskeramik 2 frei bleibt, in welcher also die Beschichtung fehlt. Die Kontur dieses Strukturelements kann beispielsweise die Gestalt eines Logos, eines Schriftzugs oder eines Symbols haben. Durch die strukturierte Unterbrechung der Farbschicht kann Licht durch das Strukturelement und die Glaskeramik 2 hindurch das Glaskeramikelement 1 passieren. Die einzelnen Schichten der Beschichtung 5 werden nacheinander aufgebracht. Hier besteht nun das Problem, dass die Kontur des Strukturelements 53 in der nachfolgenden zweiten Farbschicht 52 nicht ohne weiteres in exakte Deckung mit dem Strukturelement 53 in der ersten Farbschicht gebracht werden kann. Daher wird anstelle eines Strukturelements ein größerer Bereich in Gestalt eines Fensters 54 oder ein Rücksprung zum Strukturelement 53 in der zweiten Farbschicht 52, die auch als Versiegelungsschicht dienen kann, freigelassen.

Dies ist nachteilig, da im Bereich des Fensters 54 die Schichtdicke der Beschichtung 5 auf die Dicke der ersten Farbschicht 51 reduziert ist. Sofern die erste Farbschicht nicht absolut opak ist, kann daher im Bereich des Fensters Licht durch die Glaskeramik 2 dringen. Damit wird das Fenster bei einer Hinterleuchtung des Strukturelements 53 sichtbar. Auch sind beim Siebdruck die erreichbaren minimalen Strukturbreiten begrenzt.

Fig. 2 zeigt nun eine Vorrichtung 3 zur Durchführung des erfindungsgemäßen Verfahrens, also eines Verfahrens zur Herstellung eines Glaskeramikelements mit strukturierter Beschichtung.

Die Vorrichtung 3 umfasst einen Laser 7 und eine Einrichtung, um den vom Laser 7 erzeugten Laserstrahl 71 über die mit einer Beschichtung 5 beschichtete Oberfläche eines Glaskeramikelements 1 zu führen. Als Einrichtung zur Führung des Laserstrahls 71 über die Oberfläche kann beispielsweise ein Galvanometerscanner 15 verwendet werden.

Wie in Fig. 2 dargestellt, kann alternativ oder zusätzlich zu einem Galvanometerscanner aber auch eine Einrichtung zur Bewegung des Glaskeramikelements 1 vorgesehen sein. Insbesondere eignet sich hierfür ein X-Y-Tisch 16, auch als Kreuztisch bezeichnet. Bei dieser Ausführungsform kann der Laserstrahl 71 festgehalten und das Strukturelement in der gewünschten Form durch Bewegen des X-Y-Tisches mit dem darauf angeordneten Glaskeramikelement 1 in die Beschichtung 5 eingefügt werden.

Um den Laserstrahl 71 zur Erzielung einer möglichst hohen Intensität auf der Oberfläche zu fokussieren, kann eine geeignete Fokussierungsoptik 9 vorgesehen sein. Bei dem in Fig. 2 gezeigten Beispiel ist diese Fokussierungsoptik dem Galvanometerscanner 15 nachgeordnet. Es ist dem Fachmann ersichtlich, dass aber auch andere Konfigurationen möglich sind, die geeignet sind, den Laserstrahl 71 auf das Glaskeramikelement 1 zu fokussieren. Eine Anordnung der Fokussierungsoptik in Strahlrichtung hinter dem Galvanometerscanner ist günstig, um kurze Brennweiten zu erreichen. Allgemein, unabhängig vom speziellen Aufbau der Optik und Bewegungsmechanik, wie sie das Beispiel der Fig. 2 zeigt, wird eine Fokussierungsoptik, insbesondere eine Linse oder Linsengruppe oder ein fokussierender Spiegel mit einer Brennweite von weniger als 250 mm bevorzugt. Insbesondere bevorzugt ist eine Brennweite von weniger als 100mm.

Um die Beschichtung 5 lokal zu entfernen und damit ein die Beschichtung 5 unterbrechendes Strukturelement 53 zu schaffen, wird der Laserstrahl 71 mit der Einrichtung zur Führung des Laserstrahls über die Oberfläche bewegt, wobei der Laser 7 so eingestellt ist, dass die Ablationsschwelle des Materials der Beschichtung 5 überschritten und damit die Beschichtung am Auftreffort entfernt wird. Dabei wird die Laserleistung jedoch so eingestellt das die Ablationsschwelle des Trägermaterials nicht erreicht wird und so nur die Beschichtung/Farbe entfernt wird. Als Beispiel sei die unter dem Namen Robax vertriebene Glaskeramik genannt. Bei dieser Glaskeramik liegt die Ablationsschwelle für eine Laserwellenlänge von 1064 nm bei 5,2*10¹⁷ W/m².

Bei dem in Fig. 2 gezeigten Beispiel wurde die Beschichtung 5 dabei so entfernt, dass als Strukturelement 53 ein Informationssymbol erhalten wird.

Die Einrichtung zur Führung des Laserstrahls wird mittels einer Steuerungseinrichtung 13 angesteuert. Auf dieser kann beispielsweise ein Programm ablaufen, welches die Form und den Ort des Strukturelements in Steuersignale übersetzt, mit welchen der Laserstrahl 71 mittels der Einrichtung zur Führung des Laserstrahls über die Oberfläche bewegt wird. Vorzugsweise steuert die Steuerungseinrichtung auch den Laser 7, insbesondere hinsichtlich eines An- und Abschaltens und der Laserintensität.

Erfindungsgemäß wird nun nicht nur lediglich die Beschichtung 5 selbst entfernt. Vielmehr wird auch die Glaskeramik 2 des Glaskeramikelements 1 lokal modifiziert. Insbesondere ist diese Modifikation derart, dass die optischen Eigenschaften der Glaskeramik 2 verändert werden.

Eine solche Modifikation kann
- eine Volumenfärbung der Glaskeramik beziehungsweise allgemein eine Änderung der Absorption der Glaskeramik,
- das Einbringen lichtstreuender Defekte in der Glaskeramik oder
- eine Ablation und Aufrauung beziehungsweise Mattierung der im Strukturelement freigelegten Oberfläche der Glaskeramik sein.

Zusammenfassend basiert das erfindungsgemäße Verfahren damit auf folgenden Schritten:
- Bereitstellen eines Glaskeramikelements 1 mit einer im sichtbaren Spektralbereich zumindest teilweise lichtblockenden, vorzugsweise opaken Beschichtung,
   - Bestrahlen des Glaskeramikelements 1 mit einem gepulsten Laserstrahl, so dass durch Ablation die Beschichtung 5 entfernt und die Glaskeramik vorzugsweise freigelegt wird, wobei
   - der Laserstrahl während des Bestrahlens über die Oberläche des Glaskeramikelements 1 bewegt wird, so dass ein Bereich der Beschichtung 5 entfernt wird, , sowie
   - Nach dem Entfernen der Beschichtung 5 Bestrahlen der Glaskeramik mit dem gleichen Laser 7 im Bereich der entfernten Beschichtung 5 derart, dass die Glaskeramik im bestrahlten Bereich optisch modifiziert wird.

Der Bereich der Beschichtung, welcher entfernt wird, kann dabei auch eine größere laterale Ausdehnung aufweisen, als der Durchmesser des Laserstrahls. Auch bei einem linienförmigen Bereich, der nicht breiter als der Durchmesser des Laserstrahls ist, ist dabei dessen Längsabmessung größer.

Das Bestrahlen des Glaskeramikelements 1 mit einem gepulsten Laserstrahl erfolgt wie auch bei dem in Fig. 2 gezeigten Beispiel besonders bevorzugt auf der mit der Beschichtung 5 versehenen Oberfläche oder Seite. Gegebenenfalls kann die Ablation der Beschichtung aber auch vorgenommen werden, indem der Laserstrahl durch die Glaskeramik hindurch auf die Beschichtung 5 gerichtet wird. Mit anderen Worten wird hier das Glaskeramikelement 1 von der Seite bestrahlt, welche der mit der Beschichtung 5 versehenen Seite gegenüberliegt, wobei der Laserstrahl die Glaskeramik durchquert und auf die Grenzfläche zwischen Glaskeramik und Beschichtung 5 trifft.

Gegebenenfalls kann unter der Beschichtung 5 auch noch eine weitere Schicht wie etwa eine transparente Barrierebeschichtung vorhanden sein. In diesem Fall kann die Glaskeramik mit dieser weiteren Beschichtung freigelegt werden, wobei die weitere Beschichtung entweder ebenfalls entfernt oder im von der opaken Beschichtung 5 befreiten Bereich belassen wird.

Vorzugsweise wird der Laser 7 gepulst betrieben, um hohe Intensitäten für die Ablation des Materials der Beschichtung 5 bereitzustellen. Insbesondere eignet sich eine Bestrahlung mit Laserpulsen, deren Pulslängen im Picosekundenbereich, also bei maximal 1000 ps oder darunter liegen. Vorzugsweise liegt die Pulslänge bei unter 200 ps, besonders bevorzugt unter 20 ps, um hohe Leistungsdichten zu erzielen. Insbesondere bei der optischen Modifizierung der Glaskeramik nach dem Entfernen der Beschichtung, speziell bei einer Einfärbung oder Absenkung der Transmission können auch noch kürzere Pulse im Femtosekundenbereich, beziehungsweise mit Pulslängen unter 1 ps eingesetzt werden.

Gemäß einer Weiterbildung der Erfindung wird das Glaskeramikelement 1 mit Laserpulsen mit einer Einzelpulsenergie im Bereich von 5 bis 200 pJ/Puls, vorzugsweise bis 100 pJ/Puls bestrahlt. Beispielsweise eignet sich dazu ein picosekundengepulster Laser mit einer Ausgangsleistung von 8 bis 10 W verwendet.

Insbesondere sind Laser mit kürzeren Wellenlängen geeignet, um einerseits die Beschichtung 5 durch Ablation zu entfernen und andererseits die Glaskeramik optisch zu modifizieren. Besonders bevorzugt wird daher Laserstrahlung mit einer Wellenlänge von kleiner als 800 nm. Die Laserstrahlung liegt dabei demgemäß im sichtbaren oder ultravioletten Spektralbereich. Diese Wellenlängen ermöglichen sowohl eine Ablation der Beschichtung 5, als auch eine Änderung der optischen Eigenschaften der Glaskeramik in deren Volumen.

Als Laser 7 kann dabei gemäß einem Ausführungsbeispiel ein frequenzverdoppelter, picosekunden-gepulster Nd:YAG-Laser eingesetzt werden. Versuche wurden mit einem solchen Laser mit einer Ausgangsleistung von 8 W und einer Pulslänge von 10 ps durchgeführt.

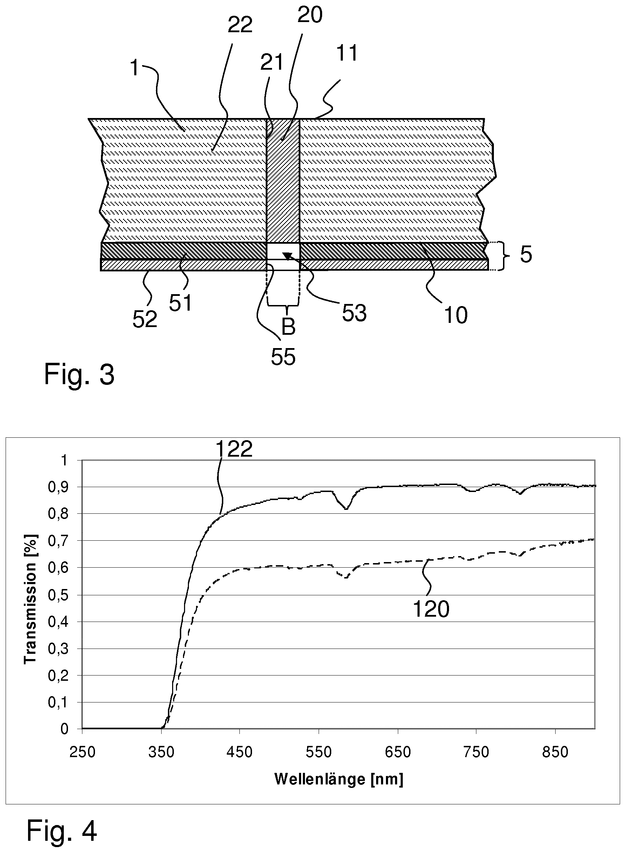

Fig. 3 zeigt schematisch ein Glaskeramikelement 1, welches mit dem erfindungsgemäßen Verfahren zur Herstellung einer strukturierten Beschichtung 5 bearbeitet wurde.

Auch hier ist wie bei dem in Fig. 1 gezeigten Beispiel eine mehrschichtige Beschichtung 5 mit zwei Farbschichten 51, 53 vorgesehen. Durch die Ablation wird ein Strukturelement 53 in Form eines Bereiches geschaffen, in welchem die Beschichtung 5 entfernt ist, wobei die Konturen der entfernten Bereiche der einzelnen Farbschichten 51, 52 deckungsgleich sind. Die einzelnen Schichten der Beschichtung 5 müssen nicht alle Farbschichten sein. Daher ist allgemein gemäß einer Ausführungsform vorgesehen, dass die Beschichtung 5 mehrere Schichten 51, 52 aufweist, wobei die Kontur 55 des durch Entfernen, beziehungsweise lokalem Fehlen der Beschichtung 5 gebildeten Strukturelements 53 der Beschichtung 5 deckungsgleiche Ränder der entfernten Bereiche der Schichten 51, 52 umfasst.

Zusätzlich wird wie gesagt mit der Laserbestrahlung auch ein Bereich 20 der Glaskeramik 2 optisch modifiziert. Im Allgemeinen wird zuerst die Beschichtung 5 entfernt, so dass diese die Laserstrahlung nicht mehr blockt und in die Glaskeramik 2 eindringen kann. Die intensive Laserstrahlung ändert nun die optischen Eigenschaften der Glaskeramik 2.

Bei dem in Fig. 3 gezeigten Beispiel werden, wie dies auch bevorzugt ist, die optischen Eigenschaften der Glaskeramik 2 in deren Volumen geändert. Der Bereich 20 ist mithin gemäß dieser Ausführungsform ein Volumenabschnitt der Glaskeramik 2 des Glaskeramikelements 1. Die Modifikation der optischen Eigenschaften der Glaskeramik 2 erfolgt durch das Strukturelement 53, beziehungsweise durch den abgetragenen Bereich der Beschichtung 5 hindurch. Damit lässt sich die Kontur 21 des modifizierten Bereichs 20 an die Kontur 55 des Strukturelements 53 genau anpassen. Damit ist auch die Kontur 21 des optisch modifizierten Bereiches 20 zumindest abschnittsweise im Wesentlichen deckungsgleich zur Kontur des Strukturelements 53. Im Wesentlichen deckungsgleich besagt hierbei, dass die Kontur vollständig deckungsgleich ist oder deren Verlauf maximal um 5 µm zum Verlauf der Kontur 55 des Strukturelements 53 versetzt ist. Solche geringfügigen Versetzungen können beispielsweise durch Streu-, Beugungs- oder Abschattungseffekte an der Kontur 55 des Strukturelements 53 erfolgen. Jedenfalls ermöglicht es die Erfindung, optisch modifizierte Bereiche einer Glaskeramik mit Strukturelementen in Form von lichtdurchlässigen Öffnungen einer ansonsten lichtblockenden Beschichtung 5 auf der Glaskeramik sehr genau und in sehr einfacher Weise in Deckung zu bringen.

Weiterhin ist die Glaskeramik 2 aufgrund der nachträglichen Modifikation monolithisch. Dies bedeutet, dass es zwischen dem optisch modifizierten Bereich 20 und benachbarten Bereichen 22 keine Fügegrenze gibt. Insbesondere wird die Kontur 21 des optisch modifizierten Bereiches 20 nicht durch eine Fügegrenze gebildet.

Mittels des erfindungsgemäßen Verfahrens wird damit allgemein ein Glaskeramikelement 1 mit einer Beschichtung 5 geschaffen, welches folgende Merkmale aufweist:
- das Glaskeramikelement ist vorzugsweise plattenförmig und weist zwei gegenüberliegende Seitenflächen 10, 11 auf, wobei
- auf der Glaskeramik 2, vorzugsweise auf einer der Seitenflächen eine im sichtbaren Spektralbereich zumindest teilweise lichtblockende, insbesondere opake Beschichtung 5 aufgebracht ist, wobei
- ein Bereich der Beschichtung 5, nämlich der Bereich des Strukturelements 53 entfernt ist, und wobei
- die Glaskeramik 2 des Glaskeramikelements 1 einen ersten Bereich 21 aufweist, in welchem dessen optische Eigenschaften gegenüber den optischen Eigenschaften benachbarter Bereiche 22 modifiziert sind, wobei die Kontur 21 des ersten Bereiches 21, beziehungsweise dessen Rand, zumindest abschnittsweise deckungsgleich mit der Kontur 55 des Bereiches ist, in welchem die Beschichtung 5 entfernt ist, dergestalt, dass der Verlauf der Kontur des ersten Bereichs in den deckungsgleichen Abschnitten maximal um 20 pm, vorzugsweise maximal 5 µm zum Verlauf der Kontur 55 des Strukturelements 53 versetzt ist, und wobei der erste Bereich 21 und benachbarte Bereiche monolithisch sind, so dass der erste Bereich 21 und der oder die benachbarten Bereiche 22 ohne Fügegrenze ineinander übergehen.

Auch bei schwarzer beziehungsweise dunkel eingefärbter Glaskeramik wird optional auf der Unterseite eine sogenannte Streulichtabdeckung appliziert, um das Einsehen des Kochfeldes durch den Benutzer von oben zu vermeiden. Das Aufbringen einer solchen Beschichtung erfolgt üblicherweise ebenfalls im Siebdruck. Die Unterseite der Glaskeramikplatte ist in der Regel genoppt, um die Festigkeit der Glaskeramik zu erhöhen. Durch die Noppenstruktur ist es schwierig, feine Zeichen in dieser Schicht zu drucken. Dies wird durch die unebene Oberfläche aufgrund der Noppenberge und Noppentäler verursacht. Die Unebenheit führt zu einem Verlauf der gedruckten Kante. Durch nachträgliches lokales Entfernen dieser Streulichtabdeckung könnten künftig ebenfalls feine Zeichen hergestellt werden.

Mit dem Verfahren können demgegenüber sehr feine Strukturelemente 53 erzeugt werden. Allgemein, ohne Beschränkung auf das dargestellte Beispiel können Strukturelemente 53 in Form von Bereichen, in denen die Beschichtung entfernt wurde, erzeugt werden, deren Breite B (also der Abstand gegenüberliegender Konturlinien) zumindest abschnittsweise kleiner als 450 pm, vorzugsweise kleiner als 300 pm, insbesondere bevorzugt kleiner als 250 µm beträgt. Es sind sogar Strukturbreiten von 120 µm und weniger, oder auch 100 µm und weniger möglich.

Insbesondere eignet sich das Verfahren auch wie gesagt, um eine Beschichtung 5 auf einer genoppten Seite eines Glaskeramikelements 1 lokal zu entfernen und entsprechende Strukturelemente zu erzeugen.

Gemäß einer Ausführungsform der Erfindung erfolgt die optische Modifikation der Glaskeramik in Form einer durch die Bestrahlung mit dem Laser 7 induzierten Reduzierung der Lichttransmission der Glaskeramik. Demgemäß ist nach dieser Ausführungsform der Erfindung die Lichttransmission des ersten Bereichs 21 gegenüber benachbarten Bereichen 22 abgesenkt. Das Verfahren zur Absenkung der Transmission mittels Laserbestrahlung ist in der deutschen Patentanmeldung DE 10 2013 110 576.9 genauer beschrieben. Der Inhalt der DE 10 2013 110 576.9 wird bezüglich der Senkung der Transmission einer Glaskeramik vollumfänglich auch zum Gegenstand der vorliegenden Anmeldung gemacht. Generell wird hierbei bevorzugt, dass die Laserintensität beim Bestrahlen der Glaskeramik, um deren Lichttransmission abzusenken, unterhalb der Ablationsschwelle der Glaskeramik bleibt.

Mit einer solchen lokalen Einfärbung kann beispielsweise ein sogenannter "Dead-Front-Effekt", insbesondere bei dunkel erscheinenden Beschichtungen erzeugt werden. Die Laserintensität wird dabei so gewählt das eine Färbung der Glaskeramik 2 in Form einer Absenkung der Transmission erfolgt. Mit diesen Einstellung kann dann auch zuerst die Druckfarbe entfernt und danach das Trägermaterial in diesem so frei gelegtem Bereich gefärbt werden, sofern die Lichtintensität die Ablationsschwelle der Beschichtung 5 überschreitet. Geeignete Einzelpulsenergien dazu liegen im Bereich von 5 bis 200 pJ/Puls.

In Weiterbildung der Erfindung wird durch die Bestrahlung die integrale Lichttransmission des sichtbaren Spektralbereiches (380 nm bis 780 nm) der Glaskeramik im bestrahlten Bereich 21 relativ zum unbestrahlten Bereich 22 um zumindest 2 %, bevorzugt um zumindest 3,5 % und besonders bevorzugt um zumindest 5 % verringert.

Wird etwa bei dem in Fig. 3 gezeigten Beispiel das Glaskeramikelement 1 als Kochplatte eingesetzt, bei welcher die Beschichtung 5 unterseitig aufgebracht ist und die Glaskeramik eine relativ hohe Transmission aufweist, so wäre das Strukturelement 53 von der Seite 11 aus betrachtet sichtbar. Die Abdunkelung des ersten Bereiches 21 gleicht dabei die Farbe der Glaskeramik 2 zumindest teilweise an den durch die unterseitige Beschichtung 5 bewirkten Farbton an, so dass das Strukturelement 53 optisch unauffälliger wird. Wird ein Strukturelement dazu in die Beschichtung 5 eingebracht, um darunter ein leuchtendes Anzeigeelement anzuordnen, welches von der Seite 11 aus sichtbar ist, wird die Lichttransmission des ersten Bereichs 21 aber vorzugsweise nur so weit abgesenkt, dass das Licht noch gut durch den Bereich 21 hindurch sichtbar ist.

Um die Absenkung der Lichttransmission zu erzielen, ist es günstig, wenn die Glaskeramik Metallionen als farbbildende Bestandteile enthält, welche durch die Laserstrahlung in farbgebende Bestandteile umgewandelt werden. In einer Ausführungsform der Erfindung enthält die Glaskeramik zumindest eines der folgenden Elemente Titan, Zinn, Eisen, Vanadium, Chrom, Cer, Neodym, Europium, Mangan, Kobalt, Nickel, Zink, Arsen, Antimon, Kupfer, Silber und/oder Gold.

Gemäß einer vorteilhaften Ausgestaltung der Erfindung wird im gesamten sichtbaren Spektralbereich die integrale Lichttransmission verringert. Insbesondere erfolgt die Verringerung der Lichttransmission über den gesamten sichtbaren Spektralbereich gleichmäßig, so dass die bestrahlen Bereiche eine Graufärbung aufweisen. Somit unterscheiden sich Gläser, die mit dem erfindungsgemäßen Verfahren behandelt wurden, von Gläsern oder Glaskeramiken, die durch Solarisationseffekte eingefärbt wurden und meist eine ausgeprägte Verringerung der Transmission im UV-Bereich sowie eine sichtbare Braunfärbung aufweisen.

Die Zusammensetzung der Glaskeramik hat dabei einen Einfluss auf die Ausprägung der Färbung.
So kann beispielsweise durch die Bestrahlung von titanhaltigen Glaskeramiken eine solche wie oben beschriebene graue oder grau-bläuliche Abdunklung erhalten werden.

Dies ist vorteilhaft, da somit die bestrahlten Bereiche einem Betrachter zwar dunkler erscheinen, der Farbeindruck jedoch weitgehend unverändert ist. Insbesondere können somit beispielsweise Lichtquellen wie LEDs beim Durchscheinen durch die bestrahlten Bereiche abgedunkelt werden, während sich der Farbeindruck für einen Betrachter nicht oder nicht merklich ändert.

Insbesondere ist gemäß einer Weiterbildung der Erfindung der Unterschied der Transmission (τ₁-τ₂)/(τ₁+τ₂) mit τ₁ als Transmission des ersten Bereiches für eine bestimmte Wellenlänge und mit τ₂ als Transmission des zweiten Bereiches für diese Wellenlänge bei einer Variation der Wellenlänge über den sichtbaren Spektralbereich im Wesentlichen konstant. Dies bedeutet, dass der Unterschied der Transmission (τ₁(λ)-τ₂(λ))/(τ₁(λ)+τ₂(λ)) mit τ₁(λ) als Transmission des unbestrahlten Bereiches für eine bestimmte Wellenlänge λ und mit τ₂ als Transmission des erfindungsgemäß behandelten Bereiches 20 für diese Wellenlänge bei einer Variation der Wellenlänge über den sichtbaren Spektralbereich, vorzugsweise im Spektralbereich von 400 nm bis 780 nm um maximal 30%, vorzugsweise maximal 20% bezogen auf den Mittelwert dieses Unterschieds der Transmission schwankt.

Dem Effekt der Absenkung der Transmission im behandelten ersten Bereich 20 liegt eine durch die Laserbestrahlung induzierte Erhöhung des Absorptionskoeffizienten der Glaskeramik zugrunde. Für den spektralen, beziehungsweise wellenlängenabhängigen Absorptionskoeffizienten α(λ) gilt daher eine analoge Beziehung zur oben angegebenen Schwankung des wellenlängenabhängigen Transmissionsunterschieds. Demgemäß gilt in Weiterbildung der Erfindung für die wellenlängenabhängigen Absorptionskoeffizienten α₁(λ) (Absorptionskoeffizient des ersten, bestrahlten Bereichs 20) und α₂(λ) (Absorptionskoeffizient des zweiten, benachbarten Bereichs 22), dass der Unterschied (α₁(λ)-α₂(λ))/α₁(λ)+α₂(λ)) im Wellenlängenbereich von 400 bis 780 nm wiederum um maximal 30%, vorzugsweise maximal 20% bezogen auf den Mittelwert dieses Unterschieds im genannten Wellenlängenbereich schwankt.

Fig. 4 zeigt die spektralen Transmissionsgrade einer erfindungsgemäß behandelten, transparenten, 4 mm dicken Glaskeramik-Platte als Funktion der Wellenlänge. Die Kurve 120 in Fig. 2 bezeichnet dabei den spektralen Transmissionsgrad eines erfindungsgemäß behandelten Bereichs 20, Kurve 122 den spektralen Transmissionsgrad eines benachbarten, unbehandelten Bereichs 22.

Anhand der beiden Kurven wird ersichtlich, dass im behandelten Bereich 20 die Transmission über den gesamten sichtbaren Spektralbereich geringer ist als im nicht mit dem Laser bestrahlten Bereich 22, wobei die Transmissionsunterschiede zwischen erstem und zweitem Bereich über den gesamten sichtbaren Spektralbereich relativ konstant sind.

Dies ist von Vorteil, wenn weniger der Farbton beeinflusst, sondern die Durchsicht vermindert werden soll, um etwa gezielt Bereiche des Glas- oder Glaskeramikelements abzudunkeln. Gemäß einer Weiterbildung der Erfindung und ohne Beschränkung auf das spezielle Ausführungsbeispiel ist im ersten Bereich daher die spektrale Transmission innerhalb des gesamten Spektralbereichs zwischen 400 nm und 780 nm niedriger als in einem benachbarten, zweiten Bereich.

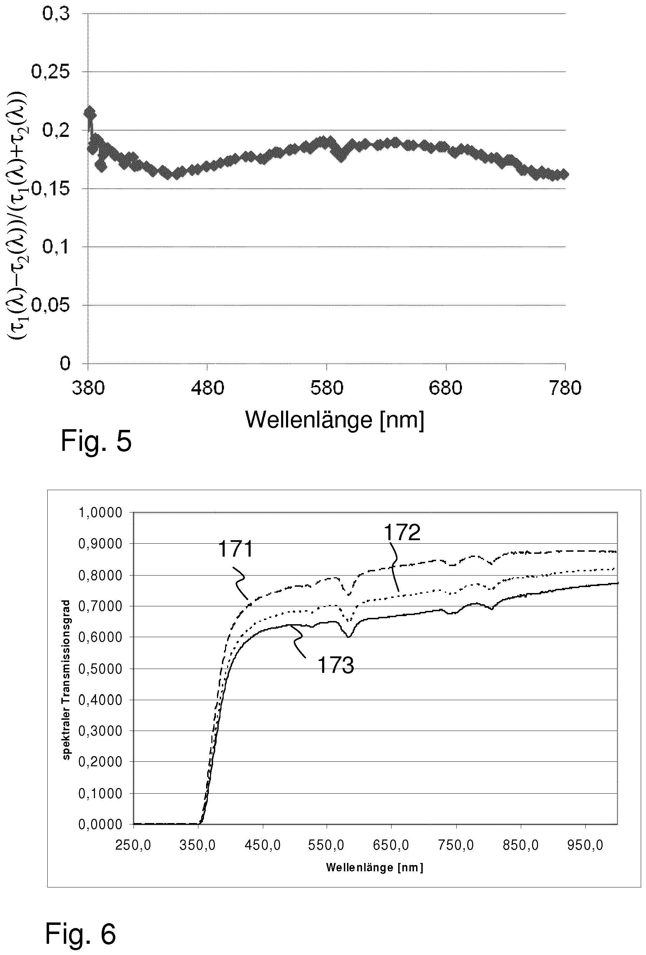

Fig. 5 zeigt dazu den Unterschied (τ₁-τ₂)/τ₁+τ₂) der beiden Kurven τ₁(λ), τ₂(λ) aus Fig. 4 für den sichtbaren Spektralbereich zwischen 400 nm und 780 nm Wellenlänge. Wie aus der Figur ersichtlich, schwankt der Unterschied über den dargestellten Spektralbereich nur wenig. Der Mittelwert des Unterschieds, also der Mittelwert der Werte (τ₁-τ₂)/(τ₁+τ₂) für alle Wellenlängen im Bereich von 400 nm bis 780 nm liegt in diesem Beispiel bei 0,177. Die maximale Schwankung, also die Differenz des Maximalwerts und Minimalwerts dieses Unterschieds beträgt im dargestellten Beispiel 0,0296. Damit ergibt sich eine Schwankung des Unterschieds bezogen auf dessen Mittelwert von 0,0296/0,177 = 0,167, beziehungsweise 16,7%. Die Schwankung beträgt hier also nur etwas weniger als 17% bezogen auf den Mittelwert.

Beim vorstehend beschriebenen Verfahren bei der Absenkung der Transmission der Glaskeramik 2 besteht keine Notwendigkeit, den Laserstrahl 71 punktförmig im Material zu fokussieren. Um eine im Volumen des Glaskeramikelements 1 ausgebreitete Transmissionsänderung bzw. eine Volumenfärbung im bestrahlten Bereich zu erzielen, reicht die Wahl einer Fokusebene des Lasers außerhalb der Materialdicke aus.

Fig. 6 zeigt dazu Transmissionsspektren eines weiteren Ausführungsbeispiels in Abhängigkeit von dem gewählten Fokusabstand des Lasers zur Oberfläche des Glaskeramikelements 1. Bei dem Werkstück handelt es sich in diesem Ausführungsbeispiel um eine transparente Glaskeramikplatte mit einer Dicke von 4 mm. Die Kurven 171, 172 und 173 zeigen die Transmissionsspektren verschiedener bestrahlter Bereiche, wobei jeder Bereich mit einem anderen Fokusabstand bestrahlt wurde. Kurve 171 zeigt das Transmissionsspektrum eines bestrahlten Bereiches, wobei während der Bestrahlung der Fokusabstand weiter von der Oberfläche der Glaskeramik entfernt war als bei der Bestrahlung der Bereiche, deren Transmissionsspektren durch die Kurven 172 und 173 gezeigt wird. Fig. 6 zeigt, dass mit geringerem Fokusabstand die Tranmissionsverringerung intensiviert wird, d.h. die Intensität der Einfärbung nimmt zu, je näher der Fokus des Lasers an die Oberfläche der Glaskeramik bzw. allgemein des Werkstücks gelegt wird, da somit auch die Leistungsdichte des Lasers erhöht wird.

Eine Ausführungsform der Erfindung sieht daher vor, dass nach dem Entfernen der Beschichtung 5 die Fokusebene über oder unter die Oberfläche des bereitgestellten Glaskeramikelements 1 gelegt wird. Ein relativer Abstand der Fokusebene des Lasers 7 zur Oberfläche des Glaskeramikelements 1 im Bereich von 2 mm bis 10 mm, insbesondere im Bereich von 4 mm bis 8 mm hat sich als besonders vorteilhaft herausgestellt. Zur Erzeugung einer Abdunklung im gesamten Volumen des bestrahlten Bereiches 20 ist gemäß einer Ausführungsform der Erfindung lediglich eine Abrasterung der Fläche, nicht jedoch eine Abrasterung der Tiefe notwendig.

Insbesondere um eine deutlichere Senkung der Transmission zu erzielen, ist gemäß noch einer Weiterbildung der Erfindung vorgesehen, dass der bestrahlte Bereich 20 mehrfach mit verschiedener Lage des Fokus abgerastert wird. Vorzugsweise liegt dabei aber der Fokus immer im Volumen der Glaskeramik. Es hat sich als günstig erwiesen, den Abstand der Fokalebenen dabei im Bereich von 100 µm bis 1000 µm zu wählen. Werden die Ebenen beispielsweise in Schritten von 400 µm abgerastert, ergibt sich bei einer Dicke der Glaskeramik von 4 mm eine Abrasterung in sieben Ebenen.

Die Lage des Fokuspunkts, im Speziellen der Abstand der Fokusebene zur Oberfläche des Glaskeramikelements 1 kann jedoch gemäß einer weiteren Ausführungsform während des Scannvorgangs geändert werden, beispielsweise um die Homogenität der Transmissionsverringerung innerhalb des bestrahlten Volumens zu erhöhen oder um dreidimensionale Effekte zu erzielen. So kann der Fokuspunkt ober- oder unterhalb des Werkstückes, d.h. des Glaskeramikelements 1, liegen. Durch die Positionierung des Laserfokus (oberhalb oder unterhalb des Glaskeramikelements 1) sowie die Entfernung des Fokuspunktes von der Oberfläche des Glaskeramikelements 1 kann die Intensität der Abdunklung bzw. Transmissionsänderung beeinflusst werden. So ist beispielsweise die Intensität der Abdunklung bei einem Fokuspunkt unterhalb des Glaskeramikelements 1 stärker als bei einem entsprechenden, gleichgroßen Fokus oberhalb des Glaskeramikelements 1. So kann durch Variation der Leistungsdichte bzw. Änderung des Fokusabstandes während der Bestrahlung über die Dicke des Werkstückes unterschiedlich intensive Einfärbungen bzw. Abdunklungen erzeugt werden. Somit können beispielsweise dreidimensionale optische Effekte im Glaskeramikelement 1 erzeugt werden.

Es besteht hier keine Notwendigkeit, den Laser punktförmig im Material zu fokussieren. Um eine im Volumen des Glaskeramikelements 1 ausgebreitete Transmissionsänderung bzw. eine Volumenfärbung im bestrahlten Bereich zu erzielen, reicht die Wahl einer Fokusebene des Lasers außerhalb der Materialdicke aus.

Eine Ausführungsform der Erfindung sieht daher vor, dass insbesondere zur Senkung der Transmission der Glaskeramik die Fokusebene über oder unter die Oberfläche des Glaskeramikelements 1 gelegt wird. Ein relativer Abstand der Fokusebene des Lasers 7 zur Oberfläche des Glaskeramikelements 1 bei der Absenkung der Transmission der Glaskeramik 2 im Bereich von 2 mm bis 10 mm, insbesondere im Bereich von 4 mm bis 8 mm hat sich als besonders vorteilhaft herausgestellt, um eine durch das Glaskeramikelement 1 hindurchgehende Färbung oder Abdunkelung zu erreichen.

Die vorstehend beschriebene Senkung der Transmission erhöht die Lichtstreuung nicht oder allenfalls kaum, ist daher nicht auf Defekte in der Glaskeramik zurückzuführen.

In einer Ausführungsform ist die Lichtstreuung im Glas oder in der Glaskeramik des ersten Bereichs 20 dabei höchstens um absolut 20 %, vorzugsweise höchstens um absolut 10 %, besonders bevorzugt höchstens um absolut 5%, insbesondere bevorzugt höchstens um absolut 1% gegenüber der Lichtstreuung in der Glaskeramik benachbarter zweiter Bereiche höher. Die Lichtstreuung in den Bereichen 20, 22 bleibt also im Wesentlichen unverändert. Unter die Obergrenze einer höchstens um absolut 20 Prozent höheren Lichtstreuung fällt auch der Fall, dass die Lichtstreuung im ersten Bereich 20 kleiner ist, als in benachbarten zweiten Bereichen 22. Mit der allenfalls geringfügig erhöhten Lichtstreuung tritt diese nicht als sichtbarer Effekt hervor. Die Lichtstreuung ist der Anteil der eingestrahlten Gesamtintensität abzüglich des direkt transmittierten Lichts, der Fresnel-Reflexion und Absorption. Die absolute, in Prozent angegebene Erhöhung der Streuung bezieht sich auf den Anteil des gestreuten Lichts bei der Transmission eines Lichtstrahls. Beträgt der Anteil der gestreuten Lichtintensität im zweiten Bereich beispielsweise 3% der Gesamtintensität, so bedeutet eine Erhöhung um absolut 5% im ersten Bereich dann ein Anteil der gestreuten Lichtintensität im ersten Bereich von 3% + 5% = 8%. Die Begriffe der Transmission, Streuung, Absorption und Remission, wie sie im Sinne der Erfindung verwendet werden, entsprechen den Definitionen gemäß DIN 5036-1 und können mit den Messvorschriften gemäß ISO 15368 bestimmt werden.

Gemäß noch einer Ausführungsform der Erfindung ist es auch möglich, nach der Ablation der Beschichtung bei der Bestrahlung der in diesem Fall volumengefärbten Glaskeramik die Transmission der Glaskeramik anzuheben. Das Verfahren der Anhebung der Transmission ist genauer in der europäischen Patentanmeldung EP 2 805 829 (Anmeldenummer 14 164 628.1) beschrieben, deren Inhalt bezüglich der laserinduzierten Transmissionsanhebung, beziehungsweise Senkung des Absorptionskoeffizienten vollumfänglich auch zum Gegenstand der vorliegenden Anmeldung gemacht wird.

Demgemäß ist in einer Weiterbildung der Erfindung vorgesehen, dass nach dem Entfernen der Beschichtung 5 ein Bestrahlen der mit färbenden Metallionen volumengefärbten Glaskeramik mit dem Laser 7 im Bereich der entfernten Beschichtung 5 derart erfolgt, dass die Glaskeramik im bestrahlten Bereich durch Absenkung des Absorptionskoeffizienten optisch modifiziert wird. Insbesondere wird dies ermöglicht, indem die Leistungsdichte des Laserlichts so gewählt wird, dass sich der bestrahlte Bereich der Glaskeramikplatte lokal aufheizt, wobei
- mindestens so lange aufgeheizt wird, bis im Volumen des erhitzten Bereichs die Transmission des Glaskeramikmaterials in zumindest einem spektralen Bereich innerhalb des sichtbaren Spektralbereichs zwischen 380 Nanometern und 780 Nanometern Lichtwellenlänge erhöht wird, und
- die Einstrahlung des Laserlichts nach der Aufheizung beendet wird und der bestrahlte Bereich abkühlt.

Bei dem in Fig. 3 gezeigten Beispiel weist danach der optische modifizierte Bereich 20 demnach eine höhere Transmission im sichtbaren Spektralbereich als das umgebende Glaskeramikmaterial auf. Diese Ausführungsform der Erfindung kann auch mit weiteren Ausführungsformen hinsichtlich der optischen Modifikation der Glaskeramik kombiniert werden. So ist es denkbar, sowohl einen Abschnitt der Glaskeramik unter Anhebung der Transmission, als auch einen weiteren Abschnitt unter Absenkung der Transmission zu behandeln. So kann ein erster Abschnitt mit Ultrakurzpulsen ohne wesentliche Erwärmung abgedunkelt, ein weiterer Abschnitt durch Änderung der Bestrahlungsparameter, etwa durch Umschalten der Wellenlänge und/oder Umschalten auf einen CW-Betrieb lokal aufgeheizt werden, so dass die Lichttransmission im sichtbaren Spektralbereich ansteigt.

Die färbende Wirkung dieser Ionen kann dabei auch von einer Wechselwirkung mit weiteren Bestandteilen der Glaskeramik abhängig sein. So kann die Färbung durch Wechselwirkung mit anderen Metallionen verstärkt oder umgekehrt auch abgeschwächt werden. Mangan- und Eisenionen zeigen beispielsweise eine Wechselwirkung mit Zinn und/oder Titan, weshalb vorzugsweise Mangan- oder Eisenoxid als Färbemittel, vorzugsweise in Verbindung mit Zinnoxid und/oder Titanoxid, in der Zusammensetzung eingesetzt wird. Färbende Ionen seltener Erden, wie insbesondere Cer-Ionen wechselwirken mit Ionen von Chrom, Nickel und Kobalt. Vorzugsweise werden Oxide seltener Erden als Färbemittel daher in Verbindung mit Oxiden der vorgenannten Metalle in der Glaskeramik-Zusammensetzung zur Erzielung einer Volumenfärbung eingesetzt. Auch bei Vanadium kann eine Wechselwirkung mit Zinn, Antimon oder Titan vermutet werden.

Allgemein, ohne Beschränkung auf die speziellen Ausführungsbeispiele weist die volumengefärbte Glaskeramik gemäß einer Ausführungsform Ionen zumindest eines der folgenden Metalle oder Kombinationen von Ionen der folgenden Metalle auf:
- Vanadium, insbesondere zusammen mit Zinn und/oder Titan
- Seltene Erden, insbesondere Cer, vorzugsweise zusammen mit Chrom und/oder Nickel und/oder Kobalt,
- Mangan, vorzugsweise zusammen mit Zinn und/oder Titan,
- Eisen, vorzugsweise zusammen mit Zinn und/oder Titan.

Das Verfahren gemäß dieser Ausführungsform der Erfindung eignet sich sehr gut dazu, die Färbung eines mit Vanadiumoxid volumengefärbten Glaskeramik-Artikels lokal abzuschwächen. Demgemäß wird hierbei in dem lokalen Bereich die Transmission im sichtbaren Spektralbereich zwischen 380 Nanometern und 780 Nanometern durch die Erhitzung angehoben. Gemäß einer bevorzugten Weiterbildung dieser Ausführungsform ist daher ein mit Vanadiumoxid volumengefärbtes Glaskeramikelement vorgesehen, bei welchem im ersten erfindungsgemäß behandelten Bereich 20 die integrale Lichttransmission im sichtbaren Spektralbereich gegenüber einem benachbarten zweiten, nicht behandelten Bereich 22 angehoben ist.

Auf diese Weise können in einfacher Weise beispielsweise Fenster mit höherer Transmission in einem ansonsten dunkel erscheinenden Glaskeramik-Kochfeld erzeugt werden. Unter einem solchen Fenster kann dann eine Anzeige angebracht werden, welche für den Betrachter gut sichtbar leuchtet. Unter einem Fenster als besonders bevorzugter Form eines mit dem erfindungsgemäßen Verfahren hergestellten aufgehellten Bereichs wird ein Bereich verstanden, der von mindestens drei Seiten oder zu mindestens 50% seines Umfangs von benachbarten, nicht aufgehellten zweiten Bereichen umgeben ist. Vorzugsweise ist der erste Bereich vollständig von zweiten Bereichen, beziehungsweise nicht aufgehelltem Glaskeramikmaterial umgeben.

Vanadiumoxid stellt ein sehr starkes Färbemittel dar. Eine starke Färbung erfolgt dabei im Allgemeinen erst bei der Keramisierung. Durch geeignete Lasereinstrahlung auf die durch lokales Entfernen der Beschichtung 5 kann eine Volumenfärbung durch Vanadiumoxid wieder zumindest teilweise rückgängig gemacht werden. Um für den Fall einer mit Vanadiumoxid gefärbten Glaskeramik einen deutlich sichtbaren Effekt zu erzielen, ist dabei gemäß einer Ausführungsform der Erfindung vorgesehen, dass die Glaskeramik mindestens 0,005, vorzugsweise mindestens 0,01 Gewichtsprozent Vanadiumoxid enthält. Dies verursacht eine hinreichend starke Färbung und entsprechend einen deutliche Transmissionsänderung im optisch modifizierten Bereich 20.

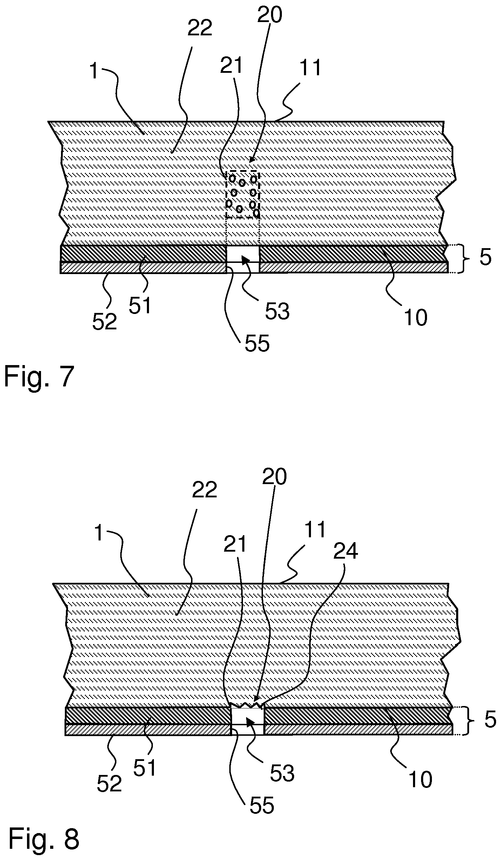

Gemäß einer weiteren Ausführungsform der Erfindung werden nach dem Entfernen der Beschichtung mit einem gepulsten hochfokussierten Laserstrahl in kleinen punktförmigen Volumen (typischerweise deutlich kleiner als 1 mm³) innerhalb der Glaskeramik Defekte erzeugt. Diese Defekte führen zu einer lokalen Reflexions- bzw. Streufläche, welche auftreffendes Licht ablenkt, reflektiert oder in alle Richtungen streut und so zu einem Milchglaseffekt führt. Das Glas wird lokal transluzent. Der Fokus des Laserstrahls wird dabei von Punkt zu Punkt innerhalb der Glaskeramik 2 geführt, so dass flächig oder räumlich ausgedehnte Muster erzeugt werden können. Bei dem in Fig. 7 gezeigten Ausführungsbeispiel ist ein Bereich 20 in der Glaskeramik 2 durch Fokussieren des Laserstrahls 71 im Inneren der Glaskeramik 2 und Erzeugen von punktuellen lichtstreuenden Defekten 23 optisch modifiziert. Auch hier erfolgt die Modifikation der optischen Eigenschaften nach dem Erzeugen eines Strukturelements 53 durch lokales Entfernen der Beschichtung 5. Dabei wird der Laserstrahl 71 ebenfalls wie bei der Senkung der Transmission durch den zuvor entfernten Bereich der Beschichtung 5 hindurch in die Glaskeramik 2 eingestrahlt. Auch hier wird bevorzugt, dass die seitliche Kontur 21 des optisch modifizierten ersten Bereichs 20 zumindest abschnittsweise deckungsgleich mit der Kontur 55 des Strukturelements 53, also der Kontur 55 des Bereiches ist, in welchem die Beschichtung 5 entfernt ist. Um die Defekte 23 im Inneren der Glaskeramik 2 zu erzeugen, wird der Fokus des Laserstrahls 71 bevorzugt in eine Tiefe im Bereich von 500 bis 2000 pm, besonders bevorzugt in eine Tiefe im Bereich von 100 bis 1500 µm unterhalb der Oberfläche der Glaskeramik gelegt. Durch die im Inneren der Glaskeramik 2 liegenden Defekte 23 wird die Festigkeit des Glaskeramikelements 1, gemessen mit einem Kugelfalltest nicht oder nur unwesentlich beeinflusst. Diese Ausführungsform der Erfindung kann alternativ, aber auch zusätzlich zu einer Senkung der Lichttransmission der Glaskeramik vorgesehen werden. So kann beispielsweise ein erster Bereich 20 mit abgesenkter Transmission lichtstreuende Defekte 23 enthalten.

Gemäß noch einer Ausführungsform der Erfindung kann der erste Bereich 20 auch durch Ablation der Glaskeramik an der Oberfläche mittels des Laserstrahls 71 optisch modifiziert werden. Fig. 8 zeigt dazu ein weiteres Ausführungsbeispiel. Bei diesem Ausführungsbeispiel ist oder umfasst der in seinen optischen Eigenschaften modifizierte erste Bereich 20 der Glaskeramik eine Mattierung 24 der Oberfläche der Glaskeramik im Bereich, an welchem die Beschichtung 5 entfernt wurde.

Dazu kann die Laserintensität so eingestellt werden, dass die Glaskeramik direkt an der Oberfläche nach dem Entfernen der Beschichtung 5 auch mit ablatiert wird, wodurch eine Mattierung 24 entsteht. Es ist also kein weiterer Prozessschritt nötig. Gegebenenfalls kann die Laserintensität auch an die im Allgemeinen unterschiedlichen Ablationsschwellen von Beschichtung 5 und Glaskeramik 2 angepasst werden.

Jedenfalls wird es bevorzugt, dass die dabei an der Oberfläche der Glaskeramik entstehenden Defekte möglichst klein sind, um die Festigkeit des Glaskeramikelements 1 möglichst wenig zu beeinflussen. Dafür eignet sich vor allem ein Laser im UV Wellenlängenbereich. Insbesondere wird ein Laser mit einer Wellenlänge kleiner 360 nm bevorzugt.

Die Pulsintensität wird gemäß einer Weiterbildung abhängig davon gewählt, in welcher Weise das Glaskeramikelement optisch modifiziert wird. Wird nach dem Entfernen der Beschichtung 5 wie bei dem in Fig. 8 gezeigten Beispiel die Oberfläche der Glaskeramik 2 ablatiert, wird die Pulsintensität so gewählt, dass die Ablationsschwelle der Glaskeramik überschritten wird.

Wird die Glaskeramik optisch modifiziert, indem wie bei den in den Fig. 3 bis Fig. 6 gezeigten Beispielen die Lichttransmission der Glaskeramik durch die Bestrahlung mit dem Laser 7 verändert, insbesondere abgesenkt wird, so wird die Pulsintensität (Leistung pro Fläche) vorzugsweise so gewählt, dass die Ablationsschwelle nicht überschritten wird. Die Ablationsschwelle ist im Allgemeinen auch wellenlängenabhängig. Als Beispiel sei die unter dem Namen Robax vertriebene Glaskeramik genannt. Deren Ablationsschwelle liegt bei einer Laserwellenlänge von 1064 nm bei 5,2*10¹⁵ W/m² und bei einer Laserwellenlänge von 532 nm bei 1,1*10¹⁶ W/m². Bei 532 nm Wellenlänge ist die Ablationsschwelle zwar höher, allerdings kann der Laserstrahl auch besser fokussiert werden, so dass ein Leistungsverlust durch eine Frequenzverdopplung und die höhere Ablationsschwelle ausgeglichen wird. Allgemein ist bei der Ausführungsform mit einer Transmissionsänderung, insbesondere Transmissionsabsenkung aber vorteilhaft, wenn die Laserintensität nahe an der Ablationsschwelle liegt. Gemäß einer Weiterbildung dieser Ausführungsform der Erfindung ist dabei vorgesehen, dass die Laserintensität unterhalb der Ablationsschwelle der Glaskeramik liegt, aber mindestens 75%, vorzugsweise mindestens 80% der Ablationsschwelle hat.

Bei der Ausführungsform der Erfindung, bei welcher die Glaskeramik 2 im bestrahlten Bereich optisch modifiziert wird, indem punktuelle lichtstreuende Defekte 23 in der Glaskeramik 2 erzeugt werden, ist es günstig, wenn die Pulsintensität so eingestellt wird, dass im Inneren der Glaskeramik die Ablationsschwelle überschritten wird, während die Pulsintensität an der Oberfläche der Glaskeramik unterhalb der Ablationsschwelle bleibt. Zur besseren Defektausprägung ist hier insbesondere bei sehr kurz gepulsten Lasern ein Betrieb im Burst-Mode von Vorteil, da er den geringen Wärmeeintrag, der sonst vorteilhaft ist, aufwiegt und so deutlich größere Defekte hervorhebt. Bei einem Betrieb im Burst-Mode werden Laserpulse in eine Serie von Sub-Pulsen unterteilt.

Insbesondere bei transparenter Glaskeramik wird bei Kochfeldern auf der Unterseite mittels einer oder mehreren Farbschichten das Design der Kochfläche erzeugt. Mittels transluzenter Farben werden zum Teil Displayfenster gedruckt. Die Hersteller von Kochfeldern platzieren unterhalb dieser transluzenten Schicht ihre LED oder andere optische Anzeigen. Dabei werden zum Teil Streuscheiben und Symbole auf die LED aufgesetzt. Die Strukturierung bestimmter Symbole kann nun künftig durch die unterseitige Beschichtung der Glaskeramik und nachträgliche Bearbeitung mittels der erfindungsgemäßen Ablation der Beschichtung erfolgen. Dadurch können auch Standard-LEDs im unter der Kochplatte angeordneten Elektronikbord eingesetzt und das spezifische Design über die erfindungsgemäße Strukturierung des Glaskeramikelements dargestellt werden.

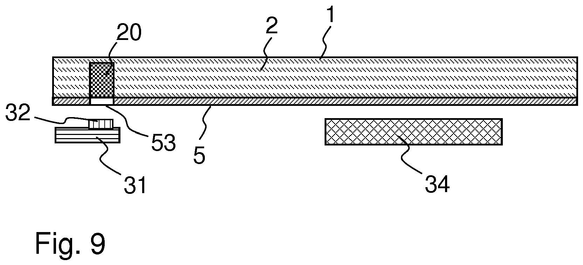

Fig. 9 zeigt dazu schematisch ein Glaskeramik-Kochfeld 30 gemäß einem weiteren Aspekt der Erfindung. Das Glaskeramik-Kochfeld 30 umfasst ein erfindungsgemäß strukturiertes Glaskeramikelement 1, welches die Kochplatte des Glaskeramik-Kochfelds 30 bildet und über der oder den Heizeinrichtungen 34 zur Erhitzung des Garguts angeordnet ist. Unter dem Strukturelement 53 des Glaskeramikelements 1, welches durch einen Bereich gebildet wird, in welchem die Beschichtung 5 entfernt ist, ist dabei eine Lichtquelle so angeordnet, dass deren Licht durch das Strukturelement 53 hindurch zur Nutzseite der Glaskeramik-Kochplatte gelangt und für eine Bedienperson sichtbar. Die Lichtquelle umfasst vorzugsweise eine Leuchtdiode. Möglich ist aber auch, als Lichtquelle einen Lichtleiter vorzusehen, dessen Lichtaustrittsfläche unter dem Strukturelement liegt. Damit können beleuchtete Anzeigeelemente auch beispielsweise in den Heißbereich verlagert werden, ohne dass das Leuchtelement (insbesondere wieder eine Leuchtdiode), welches den Lichtleiter beleuchtet, hohen Temperaturen ausgesetzt wird.

Gemäß einer weiteren Ausführungsform umfasst die Lichtquelle ein Display, insbesondere eine Matrixanzeige oder Segmentanzeige. Das Strukturelement 53 kann gemäß dieser Ausführungsform der Erfindung dann ein Fenster für dieses Display sein.

Bei der in Fig. 9 dargestellten Ausführungsform ist unter dem Strukturelement 53 ein Elektronikbord 31 insbesondere in Form einer Leiterplatte angeordnet. Auf dem Elektronikbord ist zumindest eine Leuchtdiode 32 montiert. Die Leuchtdiode 32 ist dabei so angeordnet, dass deren Licht durch das Strukturelement 53 hindurch zur Oberseite des Glaskeramikelements 1, also zur Nutzseite der Glaskeramik-Kochplatte gelangt und dort für eine Bedienperson sichtbar ist. Das Strukturelement 53 schafft dabei eine strukturierte Beleuchtung, die ein von der Bedienperson erfassbares durch das Licht der LED 32 leuchtendes Symbol bildet. Auf Streuscheiben kann insbesondere dann verzichtet werden, wenn der erste Bereich 20 selbst lichtstreuende Strukturen, wie insbesondere Defekte 23 im Inneren der Glaskeramik 2 und/oder eine Mattierung 24 aufweist.

In einer weiteren Ausführungsform der Glaskeramik-Kochplatte wird zwischen dem Glaskeramikelement 1 und der Lichtquelle eine Folie angeordnet, deren Farbe der Farbe der Beschichtung gleicht.

Alternativ zu dieser Folie kann auf dem Glaskeramikelement 1 im Bereich der entfernten Beschichtung eine transluzente Beschichtung angebracht werden.

Im Falle der beiden letztgenannten Ausführungsformen kann eine optische Modifizierung der Glaskeramik auch entfallen, da der optische Eindruck des Glaskeramikelementes aufgrund der Folie bzw. der transluzenten Beschichtung unauffällig ist.

Vorzugsweise beträgt der ΔL·a·b Wert des Abstandes der Farbwerte im L·a·b-Farbraum von Folie und Beschichtung bzw. von transluzenter Beschichtung und der umgebenden Beschichtung weniger als 10.

Besonders bevorzugte Beschichtungen 5 sind Sol-Gel-Schichten, die ein oxidisches Netzwerk ausbilden und Dekorpigmente enthalten, beziehungsweise nach dem Aushärten eine Matrix eines solchen oxidischen Netzwerks mit darin eingebetteten Dekorpigmenten bilden. Ganz besonders bevorzugt als oxidische Netzwerke werden SiO₂-Netzwerke, beziehungsweise eine SiO₂-Matrix. Gegebenenfalls können im Netzwerk noch organische Reste vorhanden sein. Die Beschichtung 5 ist dabei aber nach wie vor überwiegend anorganisch. Auch die Dekorpigmente sind vorzugsweise anorganisch.

Derartige Beschichtungen sind sehr haltbar und temperaturbeständig und lassen sich je nach Wahl der Dekorpigmente in einer nahezu unbegrenzten Anzahl verschiedener optischer Anmutungen herstellen. Dafür stellt gerade die Strukturierung solcher Beschichtungen eine Schwierigkeit dar, insbesondere, wenn ein hoher Pigmentanteil vorhanden ist, oder die einzelnen Pigmentpartikel relativ groß sind. Letzteres ist beispielsweise der Fall, wenn plättchenförmige Dekorpigmente eingesetzt werden, um Metallic- oder Glitzereffekte hervorzurufen. Das erfindungsgemäße Verfahren kann hier sogar die einzelnen Pigmentpartikel durchtrennen und diese sauber schneiden.

Geeignete Beschichtungszusammensetzungen und daraus hergestellte Beschichtungen sind unter anderem aus der DE 10 2008 031 426 A1, sowie der DE 10 2008 031 428 A1 bekannt, deren Offenbarung diesbezüglich vollumfänglich auch zum Gegenstand der vorliegenden Anmeldung gemacht wird. Demnach wird in Weiterbildung der Erfindung eine Beschichtung 5 in Form einer Versiegelungsschicht für Dekorschichten hergestellt, in dem in einem ersten Schritt die Dekorschicht mittels eines Sol-Gel-Verfahrens hergestellt wird, wobei die Schicht auf das Glas- oder Glaskeramik-Substrat aufgebracht und durch Einbrennen ausgehärtet wird, und in einem zweiten Schritt die Dekorschicht mit einer Versiegelungsschicht abgedeckt wird, die ebenfalls mittels eines Sol-Gel-Verfahrens hergestellt wird, wobei anorganische Dekorpigmente und Füllstoffe mit einem Sol vermischt werden, wobei die anorganischen Dekorpigmente plättchenförmige Pigment-Partikel und anorganische Festschmierstoff-Partikel umfassen, die in einem Verhältnis im Bereich von 10:1 bis 1:1 Gew.-%, bevorzugt 5:1 bis 1:1 Gew.-% und besonders bevorzugt 3:1 bis 1,5:1 Gew.-% zugegeben werden, und die erzeugte Mischung auf das Glaskeramik-Substrat mit der ausgehärteten Dekorschicht aufgebracht und anschließend bei erhöhten Temperaturen ausgehärtet wird. Die ausgehärtete Versiegelungsschicht kann die gleiche Zusammensetzung wie die ausgehärtete Dekorschicht 5 aufweisen, mit dem Unterschied, dass das Metalloxid-Netzwerk der Versiegelungsschicht mehr, bezogen auf die Anzahl der organischen Reste vorzugsweise mindestens 5 % mehr organische Reste als das Metalloxid-Netzwerk der Dekorschicht enthält. Unter einem Metalloxid-Netzwerk wird dabei auch ein oxidisches Netzwerk mit in elementarer Form halbleitenden Elementen verstanden (insbesondere also auch das bereits erwähnte SiO₂-Netzwerk).

Anders als vorstehend beschrieben, können aber auch andere Versiegelungsschichten verwendet werden. Neben den oben beschriebenen Sol-Gel-Versiegelungsschichten eignen sich beispielsweise auch Silikonschichten oder silikonbasierte Schichten dazu, eine darunterliegende Beschichtung zu versiegeln. Gegebenenfalls können auch Kunststoffe eingesetzt werden.

Ebenso können auf der Unterseite keramische Farben, die speziell an die Anforderungen einer keramischen Unterseitenbeschichtung angepasst wurden, verwendet werden. Eine bevorzugte Ausführungsform dieser Erfindung sind Hybridschichten, wie in DE 10 2012 103507 A1 beschrieben.

**Bezugszeichenliste**

| | |
|---|---|
| Glaskeramikelement | 1 |
| Glaskeramik | 2 |
| Vorrichtung zur Herstellung strukturierter Beschichtungen | 3 |
| Seitenfläche von 1 | 10, 11 |
| Beschichtung | 5 |
| Laser | 7 |
| Fokussierungsoptik | 9 |
| Steuerungseinrichtung | 13 |
| Galvanometerscanner | 15 |
| X-Y-Tisch | 16 |
| optisch modfizierter Bereich von 2 | 20 |
| Kontur von 20 | 21 |
| zu 20 benachbarter Bereich von 2 | 22 |
| lichtstreuender Defekt in 20 | 23 |
| Mattierung | 24 |
| Glaskeramik-Kochfeld | 30 |
| Elektronikbord | 31 |
| Leuchtdiode | 32 |
| Heizeinrichtung | 34 |
| Farbschicht | 51 |
| Versiegelungsschicht | 52 |
| Strukturelement | 53 |
| Fenster | 54 |
| Kontur von 53 | 55 |
| Laserstrahl | 71 |
| Transmissionskurven | 120, 122, 171, 172, 173 |

## Patentansprüche

1. Verfahren zur Herstellung eines Glaskeramikelements mit strukturierter Beschichtung, mit den Schritten
- Bereitstellen eines Glaskeramikelements (1) mit einer im sichtbaren Spektralbereich zumindest teilweise lichtblockenden, vorzugsweise opaken Beschichtung,
- Bestrahlen des Glaskeramikelements (1) mit einem gepulsten Laserstrahl, so dass durch Ablation die Beschichtung (5) entfernt wird, wobei
- der Laserstrahl während des Bestrahlens über die Oberfläche des Glaskeramikelements (1) bewegt wird, so dass ein Bereich der Beschichtung (5) entfernt wird, sowie
- nach dem Entfernen der Beschichtung (5) Bestrahlen der Glaskeramik mit dem gleichen Laser (7) im Bereich der entfernten Beschichtung (5) derart, dass die Glaskeramik im bestrahlten Bereich optisch modifiziert wird.

2. Verfahren gemäß dem vorstehenden Anspruch, **dadurch gekennzeichnet, dass** das Bestrahlen des Glaskeramikelements (1) mit einem gepulsten Laserstrahl auf der mit der Beschichtung (5) versehenen Seite des Glaskeramikelements (1) erfolgt.

3. Verfahren gemäß dem vorstehenden Anspruch, **dadurch gekennzeichnet, dass** Laserstrahlung mit einer Wellenlänge von kleiner als 800 nm verwendet wird.

4. Verfahren gemäß einem der beiden vorstehenden Ansprüche, **dadurch gekennzeichnet, dass** gepulste Laserstrahlung mit einer Pulslänge von kleiner 1000 ps, vorzugsweise kleiner 200 ps, besonders bevorzugt kleiner 20 ps verwendet wird.

5. Verfahren gemäß dem vorstehenden Anspruch, **dadurch gekennzeichnet, dass** die Glaskeramik optisch modifiziert wird, indem die Lichttransmission der Glaskeramik durch die Bestrahlung mit dem Laser (7) abgesenkt wird.

6. Verfahren gemäß dem vorstehenden Anspruch, **dadurch gekennzeichnet, dass** die Laserintensität beim Bestrahlen der Glaskeramik (2) unterhalb der Ablationsschwelle der Glaskeramik (2) bleibt.

7. Verfahren gemäß einem der zwei vorstehenden Ansprüche, **dadurch gekennzeichnet dass** bei der Absenkung der Lichttransmission der Glaskeramik (2) der relative Abstand der Fokusebene des Lasers (7) zur Oberfläche des Glaskeramikelements (1) 2 bis 10 mm, bevorzugt 4 bis 8 mm beträgt und/oder die Fokusebene über oder unter die Oberfläche des bereitgestellten Glaskeramikelements (1) gelegt wird.

8. Verfahren gemäß einem der vorstehenden Ansprüche, **dadurch gekennzeichnet, dass** eine mit färbenden Metallionen volumengefärbte Glaskeramik verwendet und nach dem Entfernen der Beschichtung (5) ein Bestrahlen der Glaskeramik mit dem Laser (7) im Bereich der entfernten Beschichtung (5) derart erfolgt, dass die Glaskeramik im bestrahlten Bereich durch Absenkung des Absorptionskoeffizienten optisch modifiziert wird.

9. Verfahren gemäß dem vorstehenden Anspruch, **dadurch gekennzeichnet, dass** die Leistungsdichte des Laserlichts so gewählt wird, dass sich der bestrahlte Bereich der Glaskeramikplatte lokal aufheizt, wobei
- mindestens so lange aufgeheizt wird, bis im Volumen des erhitzten Bereichs die Transmission des Glaskeramikmaterials in zumindest einem spektralen Bereich innerhalb des sichtbaren Spektralbereichs zwischen 380 Nanometern und 780 Nanometern Lichtwellenlänge erhöht wird, und
- die Einstrahlung des Laserlichts nach der Aufheizung beendet wird und der bestrahlte Bereich abkühlt.

10. Verfahren gemäß einem der vorstehenden Ansprüche, **dadurch gekennzeichnet, dass** nach dem Entfernen eines Bereichs der Beschichtung (5) der Laserstrahl (71) im Inneren der Glaskeramik (2) fokussiert und die Glaskeramik (2) im bestrahlten Bereich optisch modifiziert wird, indem punktuelle lichtstreuende Defekte (23) in der Glaskeramik (2) erzeugt werden, wobei vorzugsweise im Inneren der Glaskeramik (2) die Ablationsschwelle überschritten wird, während die Pulsintensität an der Oberfläche der Glaskeramik unterhalb der Ablationsschwelle bleibt.

11. Verfahren gemäß einem der vorstehenden Ansprüche, **dadurch gekennzeichnet, dass** nach dem Entfernen der Beschichtung (5) die Oberfläche der Glaskeramik (2) ablatiert wird.

12. Verfahren gemäß einem der vorstehenden Ansprüche, **dadurch gekennzeichnet, dass** durch Ablation die Beschichtung (5) auf einer genoppten Seite des Glaskeramikelements (1) durch Ablation entfernt wird.

13. Plattenförmig ausgebildetes Glaskeramikelement (1) mit zwei gegenüberliegenden Seitenflächen (10, 11) auf, wobei
- mindestens auf einer der Seitenflächen (10, 11) eine im sichtbaren Spektralbereich zumindest teilweise lichtblockende, vorzugsweise opake Beschichtung (5) aufgebracht ist, wobei
- ein Bereich der Beschichtung (5) entfernt ist, und wobei
- die Glaskeramik (2) des Glaskeramikelements (1) einen ersten Bereich (20) aufweist, in welchem dessen optische Eigenschaften gegenüber den optischen Eigenschaften benachbarter Bereiche (22) modifiziert sind, wobei die Kontur (21) des ersten Bereiches (21) zumindest abschnittsweise deckungsgleich mit der Kontur (55) des Bereiches ist, in welchem die Beschichtung (5) entfernt ist, dergestalt, dass der Verlauf der Kontur (21) des ersten Bereichs in den deckungsgleichen Abschnitten maximal um 20 pm, vorzugsweise maximal um 5 µm zum Verlauf der Kontur (55) des Strukturelements (53) versetzt ist, und wobei der erste Bereich (20) und benachbarte Bereiche monolithisch sind, so dass der erste Bereich (20) und die benachbarten Bereiche (22) ohne Fügegrenze ineinander übergehen.

14. Glaskeramikelement gemäß dem vorstehenden Anspruch, **dadurch gekennzeichnet, dass** die Beschichtung (5) mehrere Schichten (51, 52) aufweist, wobei die Kontur (55) des durch Entfernen der Beschichtung gebildeten Strukturelements (53) der Beschichtung (5) deckungsgleiche Ränder der entfernten Bereiche der Schichten umfasst.

15. Glaskeramikelement gemäß dem vorstehenden Anspruch, **dadurch gekennzeichnet, dass** die Lichttransmission des ersten Bereichs (21) gegenüber benachbarten Bereichen (22) abgesenkt ist.

16. Glaskeramikelement gemäß dem vorstehenden Anspruch, **dadurch gekennzeichnet, dass**
- der Unterschied der Transmission (τ₁-τ₂)/(τ₁+τ₂) mit τ₂ als Transmission des ersten Bereiches (20) für eine bestimmte Wellenlänge und mit τ₁ als Transmission des zweiten Bereiches (22) für diese Wellenlänge bei einer Variation der Wellenlänge über den sichtbaren Spektralbereich, vorzugsweise im Spektralbereich von 400 nm bis 780 nm um maximal 30%, vorzugsweise maximal 20% bezogen auf den Mittelwert dieses Unterschieds der Transmission schwankt, oder dass
- der Unterschied (α₁(λ)-α₂(λ))/(α₁(λ)+α₂(λ)), bei welchem α₁(λ) den Absorptionskoeffizient des ersten, bestrahlten Bereichs (20) und α₂(λ) den Absorptionskoeffizient eines zweiten, benachbarten Bereichs (22) im Wellenlängenbereich von 400 bis 780 nm um maximal 30%, vorzugsweise maximal 20% bezogen auf den Mittelwert dieses Unterschieds schwankt.

17. Glaskeramikelement gemäß einem der drei vorstehenden Ansprüche, **dadurch gekennzeichnet, dass** die Glaskeramik (2) des Glaskeramikelements (1) zumindest eines der folgenden Elemente Titan, Zinn, Eisen, Vanadium, Chrom, Cer, Neodym, Europium, Mangan, Kobalt, Nickel, Zink, Arsen, Antimon, Kupfer, Silber und/oder Gold enthält.

18. Glaskeramikelement gemäß einem der vorstehenden fünf Ansprüche, welches mit Vanadiumoxid volumengefärbt ist, und bei welchem im ersten Bereich (20) die integrale Lichttransmission im sichtbaren Spektralbereich gegenüber einem benachbarten zweiten Bereich (22) angehoben ist.

19. Glaskeramikelement gemäß einem der vorstehenden Ansprüche, **dadurch gekennzeichnet, dass** der erste Bereich (20) durch punktuelle lichtstreuende Defekte (23) in der Glaskeramik (2) optisch modifiziert ist.

20. Glaskeramikelement gemäß einem der vorstehenden Ansprüche, **dadurch gekennzeichnet, dass** der in seinen optischen Eigenschaften modifizierte erste Bereich (20) der Glaskeramik (2) eine Mattierung (24) der Oberfläche der Glaskeramik (2) im Bereich umfasst, an welchem die Beschichtung (5) entfernt ist.

21. Glaskeramikelement gemäß einem der vorstehenden Ansprüche, **dadurch gekennzeichnet, dass** die Breite des Bereichs, in welchem die Beschichtung (5) entfernt wurde, zumindest abschnittsweise kleiner als 450 pm, vorzugsweise kleiner als 300 µm ist.

22. Glaskeramik-Kochfeld (30), umfassend ein Glaskeramikelement (1) gemäß einem der vorstehenden Ansprüche, wobei das Glaskeramikelement (1) die Glaskeramik-Kochplatte des Glaskeramik-Kochfelds (30) bildet, wobei unter einem Strukturelement (53), welches durch einen Bereich gebildet wird, in welchem die Beschichtung (5) entfernt ist, eine Lichtquelle so angeordnet ist, dass deren Licht durch das Strukturelement (53) hindurch zur Nutzseite der Glaskeramik-Kochplatte gelangt und für eine Bedienperson sichtbar ist.

23. Glaskeramik-Kochfeld gemäß dem vorstehenden Anspruch, wobei unter dem Strukturelement (53)ein Elektronikbord (31) angeordnet ist, wobei auf dem Elektronikbord (31) zumindest eine Leuchtdiode 32 montiert ist.

24. Glaskeramik-Kochfeld gemäß Anspruch 22, wobei zwischen dem Glaskeramikelement (1) und der Lichtquelle eine Folie angeordnet ist, dessen Farbe der Farbe der Beschichtung (5) gleicht, vorzugsweise beträgt der ΔL·a·b Wert des Abstandes der Farbwerte im L·a·b-Farbraum weniger als 10.

25. Glaskeramik-Kochfeld gemäß Anspruch 22, wobei auf dem Glaskeramikelement (1) im Bereich der entfernten Beschichtung eine transluzente Beschichtung angebracht ist, deren Farbe der Farbe der Beschichtung (5) gleicht, vorzugsweise beträgt der ΔL·a·b Wert des Abstandes der Farbwerte im L·a·b-Farbraum weniger als 10.

## Claims

1. A method for producing a glass ceramic element with a patterned coating, comprising the steps of:
- providing a glass ceramic element (1) with a coating which is at least partially light-blocking and preferably opaque in the visible spectral range;
- irradiating the glass ceramic element (1) with a pulsed laser beam so as to remove the coating (5) by ablation; wherein
- during the irradiating the laser beam is directed over the surface of the glass ceramic element (1) such that a portion of the coating (5) is removed; and
- once the coating (5) has been removed, irradiating the glass ceramic with the same laser (7) in the region where the coating (5) has been removed, such that the glass ceramic is optically modified in the irradiated region.

2. The method according to the preceding claim, **characterised in that** the irradiating of the glass ceramic element (1) with a pulsed laser beam is effected on the side of the glass ceramic element (1) on which the coating (5) is applied.

3. The method according to the preceding claim, **characterised in that** laser radiation with a wavelength of less than 800 nm is used.

4. The method according to any of the two preceding claims, **characterised in that** pulsed laser radiation with a pulse length of less than 1000 ps, preferably less than 200 ps, most preferably less than 20 ps is used.

5. The method according to the preceding claim, **characterised in that** the glass ceramic is optically modified by reducing the light transmittance of the glass ceramic by the irradiation with the laser (7).

6. The method according to the preceding claim, **characterised in that** during irradiation of the glass ceramic (2), laser intensity remains below the ablation threshold of the glass ceramic (2).

7. The method according to any one of the two preceding claims, **characterised in that** during the reducing of the light transmittance of the glass ceramic (2), a distance of the focus plane of the laser (7) relative to the surface of the glass ceramic element (1) is between 2 and 10 mm, preferably between 4 and 8 mm, and/or that the focus plane is placed above or below the surface of the provided glass ceramic element (1).

8. The method according to any one of the preceding claims, **characterised in that** a glass ceramic is used which is volume-dyed by color-imparting metal ions, and that once the coating (5) has been removed, an irradiating of the glass ceramic with the laser (7) in the region where the coating (5) has been removed is performed such that the glass ceramic is optically modified in the irradiated region by lowering an absorption coefficient thereof.

9. The method according to the preceding claim, **characterised in that** the power density of the laser light is selected such that the irradiated region of the glass ceramic is locally heated; wherein
- heating is performed at least until the transmittance of the glass ceramic material is increased in the volume of the heated region, at least in a spectral range within the visible spectral range of light wavelengths between 380 nanometers and 780 nanometers; and
- once heating is completed, the irradiating of the laser light is terminated and the irradiated region is allowed to cool.

10. The method according to any one of the preceding claims, **characterised in that** once a portion of the coating (5) has been removed, the laser beam (71) is focused in the interior of the glass ceramic (2) and the glass ceramic (2) is optically modified in the irradiated region by producing local dot-like light-scattering defects (23) in the glass ceramic (2), wherein in the interior of the glass ceramic (2) the ablation threshold is preferably exceeded, while at the surface of the glass ceramic the pulse intensity remains below the ablation threshold.

11. The method according to any one of the preceding claims, **characterised in that** once the coating (5) has been removed, the surface of the glass ceramic (2) is ablated.

12. The method according to any one of the preceding claims, **characterised in that** the coating (5) on a knobbed face of the glass ceramic element (1) is removed by the ablation.

13. A plate-shaped glass ceramic element (1) having two opposite faces (10, 11), wherein:
- at least on one of the faces (10, 11), a coating (5) is applied which is at least partially light-blocking and preferably opaque in the visible spectral range; wherein
- a portion of the coating (5) has been removed; and wherein
- the glass ceramic (2) of the glass ceramic element (1) includes a first region (20) having optical properties that have been modified relative to the optical properties of adjacent regions (22), wherein a contour (21) of the first region (20) is congruent with a contour (55) of the region in which the coating (5) has been removed, at least in sections thereof, so that in the congruent sections the shape of the contour (21) of the first region is offset by not more than 20 pm, preferably by not more than 5 pm, to the shape of the contour (55) of the pattern feature (53), and wherein the first region (20) and adjacent regions are monolithic so that the first region (20) and the adjacent regions (22) merge into each other without joint.

14. The glass ceramic element according to the preceding claim, **characterised in that** the coating (5) comprises a plurality of layers (51, 52), wherein the contour (55) of the pattern feature (53) of the coating (5) formed by removal of the coating comprises congruent edges of the removed portions of the layers.

15. The glass ceramic element according to the preceding claim, **characterised in that** the light transmittance of the first region (20) is reduced with respect to adjacent regions (22).

16. The glass ceramic element according to the preceding claim, **characterised in that**
- the difference in transmittance, (τ₁-τ₂)/(τ₁+τ₂), with τ₂ being the transmittance of the first region (20) for a specific wavelength and τ₁ being the transmittance of the second region (22) for this wavelength, varies by not more than 30 %, preferably not more than 20 % with respect to the average value of this difference in transmittance for a variation in wavelength over the visible spectral range, preferably in a spectral range from 400 nm to 780 nm; or that
- the difference (α₁(λ)-α₂(λ))/(α₁(λ)+α₂(λ)), wherein α₁(λ) is the absorption coefficient of the first, irradiated region (20) and α₂(λ) is the absorption coefficient of a second, adjacent region (22), varies by not more than 30 %, preferably not more than 20 % with respect to the average value of this difference in a range of wavelengths from 400 nm to 780 nm.

17. The glass ceramic element according to any one of the three preceding claims, **characterised in that** the glass ceramic (2) of the glass ceramic element (1) comprises at least one of the following elements: titanium, tin, iron, vanadium, chromium, cerium, neodymium, europium, manganese, cobalt, nickel, zinc, arsenic, antimony, copper, silver, and/or gold.

18. The glass ceramic element according to any one of the five preceding claims, which is volume-dyed by vanadium oxide, and wherein in the first region (20) integral light transmittance in the visible spectral range is increased as compared to an adjacent second region (22).

19. The glass ceramic element according to any one of the preceding claims, **characterised in that** the first region (20) is optically modified by local dot-like light scattering defects (23) in the glass ceramic (2).

20. The glass ceramic element according to any one of the preceding claims, **characterised in that** the first region (20) with modified optical properties of the glass ceramic (2) comprises a matting (24) of the surface of the glass ceramic (2) in the region in which the coating (5) has been removed.

21. The glass ceramic element according to any one of the preceding claims, **characterised in that** the region in which the coating (5) has been removed has a width of less than 450 pm, preferably less than 300 pm, at least in sections thereof.

22. A glass ceramic cooktop (30), comprising a glass ceramic element (1) according to any one of the preceding claims, wherein the glass ceramic element (1) forms the glass ceramic cooking panel of the glass ceramic cooktop (30), wherein below a pattern feature (53) defined by a region in which the coating (5) has been removed, a light source is positioned so that the light therefrom passes through the pattern feature (53) to the utilization side of the glass ceramic cooking panel and is visible to an operating person.

23. The glass ceramic cooktop according to the preceding claim, wherein an electronics board (31) is arranged below the pattern feature (53), wherein the electronics board (31) has at least one light emitting diode (32) mounted thereon.

24. The glass ceramic cooktop according to claim 22, wherein a film is disposed between the glass ceramic element (1) and the light source, which film has a color similar to the color of the coating (5), preferably with a ΔL·a·b value of the difference of the color values in the L·a·b color space of less than 10.

25. The glass ceramic cooktop according to claim 22, wherein a translucent coating is applied on the glass ceramic element (1) in the region where the coating has been removed, which translucent coating has a color similar to the color of the coating (5), preferably with a ΔL·a·b value of the difference of the color values in the L·a·b color space of less than 10.

## Revendications

1. Procédé de production d'un élément en vitrocéramique pourvu d'un revêtement structuré, comportant les étapes suivantes :
- mise à disposition d'un élément en vitrocéramique (1) pourvu d'un revêtement bloquant au moins partiellement la lumière dans le domaine du spectre visible, de préférence opaque,
- irradiation de l'élément en vitrocéramique (1) avec un rayon laser pulsé de manière à éliminer le revêtement (5) par ablation, où
- le rayon laser est déplacé pendant l'irradiation au-dessus de la surface de l'élément en vitrocéramique (1) de manière à éliminer une zone du revêtement (5), et
- irradiation de la vitrocéramique, après élimination du revêtement (5), avec le même laser (7) dans la zone où le revêtement (5) a été éliminé de manière à modifier optiquement la vitrocéramique dans la zone irradiée.

2. Procédé selon la revendication précédente, **caractérisé en ce que** l'irradiation de l'élément en vitrocéramique (1) s'effectue avec un rayon laser pulsé sur la face de l'élément en vitrocéramique (1) pourvue du revêtement (5).

3. Procédé selon la revendication précédente, **caractérisé en ce qu'**un rayonnement laser ayant une longueur d'onde inférieure à 800 nm est utilisé.

4. Procédé selon l'une des deux revendications précédentes, **caractérisé en ce qu'**un rayonnement laser pulsé ayant une longueur de pulsation inférieure à 1000 ps, de préférence inférieure à 200 ps, de manière particulièrement préférée inférieure à 20 ps, est utilisé.

5. Procédé selon la revendication précédente, **caractérisé en ce que** la vitrocéramique est modifiée optiquement en réduisant la transmission de la lumière de la vitrocéramique par l'irradiation avec le laser (7).

6. Procédé selon la revendication précédente, **caractérisé en ce que** l'intensité du laser lors de l'irradiation de la vitrocéramique (2) reste en dessous du seuil d'ablation de la vitrocéramique (2).

7. Procédé selon l'une des deux revendications précédentes, **caractérisé en ce que**, lors de la réduction de la transmission de la lumière de la vitrocéramique (2), la distance relative entre le plan focal du laser (7) et la surface de l'élément en vitrocéramique (1) atteint 2 à 10 mm, de préférence 4 à 8 mm et/ou le plan focal est placé au-dessus ou en dessous de la surface de l'élément en vitrocéramique (1) mis à disposition.

8. Procédé selon l'une des revendications précédentes, **caractérisé en ce qu'**une vitrocéramique colorée dans le volume avec des ions métalliques colorants est utilisée et qu'une irradiation de la vitrocéramique avec le laser (7) dans la zone où le revêtement (5) a été éliminé est réalisée après l'élimination du revêtement (5) de manière à modifier optiquement la vitrocéramique dans la zone irradiée par réduction du coefficient d'absorption.

9. Procédé selon la revendication précédente, **caractérisé en ce que** la densité de puissance de la lumière laser est choisie de manière à chauffer localement la zone irradiée de la plaque en vitrocéramique, dans lequel
- on chauffe au moins tant que la transmission du matériau en vitrocéramique dans au moins un domaine spectral augmente à l'intérieur du domaine spectral visible entre 380 nanomètres et 780 nanomètres de longueur d'ondes lumineuses dans le volume de la zone chauffée, et
- l'irradiation de la lumière laser est achevée après le chauffage et la zone irradiée est refroidie.

10. Procédé selon l'une des revendications précédentes, **caractérisé en ce que**, après l'élimination d'une zone du revêtement (5), le rayon laser (71) est focalisé à l'intérieur de la vitrocéramique (2) et la vitrocéramique (2) est modifiée optiquement dans la zone irradiée en produisant des défauts ponctuels (23) dispersant la lumière dans la vitrocéramique (2), le seuil d'ablation étant dépassé de préférence à l'intérieur de la vitrocéramique (2) alors que l'intensité de la pulsation reste en dessous du seuil d'ablation à la surface de la vitrocéramique.

11. Procédé selon l'une des revendications précédentes, **caractérisé en ce que**, après l'élimination du revêtement, (5), la surface de la vitrocéramique (2) subit une ablation.

12. Procédé selon l'une des revendications précédentes, **caractérisé en ce que** le revêtement (5) est éliminé par ablation sur une face pastillée de l'élément en vitrocéramique (1).

13. Élément en vitrocéramique (1) prenant la forme d'une plaque, muni de deux faces latérales opposées (10, 11), dans lequel :
- un revêtement (5) bloquant au moins partiellement la lumière dans le domaine spectral visible, de préférence opaque, est déposé au moins sur l'une des faces latérales (10, 11), dans lequel
- une zone du revêtement (5) est éliminée, et dans lequel
- la vitrocéramique (2) de l'élément en vitrocéramique (1) présente une première zone (20), dans laquelle ses propriétés optiques sont modifiées par rapport aux propriétés optiques des zones (22) adjacentes, le contour (21) de la première zone (21) étant au moins par portion coextensif au contour (55) de la zone où le revêtement (5) est éliminé de telle sorte que le tracé du contour (21) de la première zone est décalé dans les portions coextensives d'au maximum 20 pm, de préférence d'au maximum 5 µm par rapport au tracé du contour (55) de l'élément structurel (53), et la première zone (20) et les zones adjacentes étant monolithiques si bien que la première zone (20) et les zones adjacentes (22) s'interpénètrent sans limite de joint.

14. Élément en vitrocéramique selon la revendication précédente, **caractérisé en ce que** le revêtement (5) présente plusieurs couches (51, 52), le contour (55) de l'élément structurel (53) du revêtement (5) formé par l'élimination du revêtement comprenant des bordures coextensives des zones éliminées des couches.

15. Élément en vitrocéramique selon la revendication précédente, **caractérisé en ce que** la transmission de la lumière de la première zone (21) est réduite par rapport aux zones adjacentes (22).

16. Élément en vitrocéramique selon la revendication précédente, **caractérisé en ce que** :
- la différence de transmission (τ₁-τ₂)/ (τ₁+τ₂), τ₂ étant la transmission de la première zone (20) pour une longueur d'onde déterminée et τ₁ la transmission de la deuxième zone (22) pour cette longueur d'onde, varie d'au maximum 30 %, de préférence d'au maximum 20 % par rapport à la moyenne de ladite différence de transmission lors d'une variation de la longueur d'onde dans le domaine spectral de 400 nm à 780 nm, ou **en ce que**
- la différence (α₁(λ)-α₂(λ))/(α₁(λ)+α₂(λ)), où α₁(λ) est le coefficient d'absorption de la première zone (20) irradiée et α₂(λ) est le coefficient d'absorption d'une deuxième zone adjacente (22), varie d'au maximum 30 %, de préférence d'au maximum 20 % par rapport à la moyenne de ladite différence dans la plage de longueurs d'ondes de 400 à 780 nm.

17. Élément en vitrocéramique selon l'une des trois revendications précédentes, **caractérisé en ce que** la vitrocéramique (2) de l'élément en vitrocéramique (1) contient au moins l'un des éléments suivants titane, étain, fer, vanadium, chrome, cérium, néodyme, europium, manganèse, cobalt, nickel, zinc, arsenic, antimoine, cuivre, argent et/ou or.

18. Élément en vitrocéramique selon l'une des cinq revendications précédentes, qui est coloré dans le volume avec de l'oxyde de vanadium, et dans lequel la transmission intégrale de la lumière dans le domaine spectral visible est plus élevée dans la première zone (20) que dans une deuxième zone adjacente (22).

19. Élément en vitrocéramique selon l'une des revendications précédentes, **caractérisé en ce que** la première zone (20) est modifiée optiquement par des défauts ponctuels (23) dispersant la lumière dans la vitrocéramique (2) .

20. Élément en vitrocéramique selon l'une des revendications précédentes, **caractérisé en ce que** la première zone (20) de la vitrocéramique (2), dont les propriétés optiques ont été modifiées, comprend une matification (24) de la surface de la vitrocéramique (2) dans la zone où le revêtement (5) est éliminé.

21. Élément en vitrocéramique selon l'une des revendications précédentes, **caractérisé en ce que** la largeur de la zone où le revêtement (5) a été éliminé est au moins par portion inférieure à 450 pm, de préférence inférieure à 300 pm.

22. Plaque de cuisson en vitrocéramique (30), comprenant un élément en vitrocéramique (1) selon l'une des revendications précédentes, l'élément en vitrocéramique (1) formant la plaque chauffante en vitrocéramique de la plaque de cuisson en vitrocéramique (30), une source de lumière étant disposée en dessous d'un élément structurel (53), qui est formé par une zone où le revêtement (5) est éliminé de manière à faire passer sa lumière à travers l'élément structurel (53) jusqu'à la face utile de la plaque de cuisson en vitrocéramique pour qu'elle soit visible pour un utilisateur.

23. Plaque de cuisson en vitrocéramique selon la revendication précédente, dans laquelle un tableau de bord électronique (31) est disposé sous l'élément structurel (53), dans laquelle au moins une diode luminescente 32 est montée sur le tableau de bord électronique (31).

24. Plaque de cuisson en vitrocéramique selon la revendication 22, dans laquelle un film dont la couleur est identique à la couleur du revêtement (5), est disposé entre l'élément en vitrocéramique (1) et la source de lumière, la valeur ΔL·a·b de l'intervalle des valeurs de couleur dans l'espace de couleur L·a·b étant de préférence inférieure à 10.

25. Plaque de cuisson en vitrocéramique selon la revendication 22, dans laquelle un revêtement translucide dont la couleur est identique à la couleur du revêtement (5), est disposé sur l'élément en vitrocéramique (1) dans la zone où le revêtement est éliminé, la valeur ΔL·a·b de l'intervalle des valeurs de couleur dans l'espace de couleur L·a·b étant de préférence inférieure à 10.
